# EUROPEAN PATENT SPECIFICATION

(11) **EP 0 763 314 B1**
(45) Date of publication and mention of the grant of the patent: **31.10.2001**
(21) Application number: 95650032.6
(22) Date of filing: 13.09.1995
(51) Int. Cl.: A01B 39/08, A01B 33/14

(54) **Cultivator**
Kultivator
Cultivateur

(43) Date of publication of application: 19.03.1997
(73) Proprietor: Fix, Wolfram Michael, Daylesford, Victoria 3460 (AU)
(72) Inventor: Fix, Wolfram Michael, Daylesford, Victoria 3460 (AU)
(74) Representative: McKeown, Yvonne Mary

(56) References cited:
- EP-A- 0 472 129
- DE-B- 1 045 698
- FR-A- 1 573 495
- US-A- 2 531 557
- US-A- 3 199 607
- US-A- 4 171 725
- US-A- 4 323 125
- US-A- 4 332 299
- US-A- 4 529 039

## Description

**FIELD OF THE INVENTION:** This invention relates to a cultivator and in particular to a cultivator which may be attached to a tractor or similar vehicle for use in cultivating between rows of plants and between plants.

**BACKGROUND OF THE INVENTION:** Market gardeners plant vegetables, flowers and fruits in rows in cultivated areas, the areas being relatively quite large. A problem arises, particularly when plants are young, in that weeds compete with the desired plants. Traditional methods of dealing with this problem include mechanical cultivation, spraying with selective herbicides and/or hiring labour to hand hoe between plants.

Soil cultivating and loosening implements are known in which tines or blades are fixed or driven in a rotary or oscillating motion (see e.g. DE-B-1045698). These implements disturb the soil but do not deal with the problem of weeding between rows of plants and around plants in such rows.

It would be particularly desirable to develop a mechanical means to alleviate the problem discussed above, reduce the cost of labour and chemicals and deal with the problem in an environmentally friendly way.

### BRIEF SUMMARY OF THE INVENTION:

This invention provides a cultivator according to claim 1.

Particular embodiments of the invention are defined in the dependent claims.

### BRIEF DESCRIPTION OF THE DRAWINGS:

One embodiment of the cultivator according to the invention is illustrated in the accompanying drawings in which:
Figure 1 is a front, perspective view of the cultivator viewed slightly from the left;
Figure 2 is a front, perspective view viewed slightly from the left of a sensor arm shown in ghost outline in Figure 1;
Figure 3 is a cross-sectional view of a tine means in association with a hydraulic motor;
Figure 4 is a plan view of a tine guide;
Figure 5 is a perspective view from one side of a tine;
Figure 6 is a side elevation of a hub and connectors together with a broken-away view of a tine;
Figure 7 is a side elevation of the hub, connector and tine of Figure 6, partially exploded to show its working:
Figure 8 (a) is a side view of another embodiment of a tine means with certain of the tines illustrated in ghost lines;
Figure 8(b) is a side view from underneath of the tine means of Figure 8(a);
Figure 8(c) is a side view from the working end of one of the tines of Figures 8(a) and 8(b); and
Figure 9 is a side view in cross-section of another alternative embodiment of a tine means.

### DETAILED DESCRIPTION OF THE INVENTION:

The rotary tine means may be single or multiple in construction and the tines may be constructed according to a variety of shapes and take up a variety of angular configurations. In one embodiment a tine may be fashioned out of rod which may be bent at one, two or more regions. Furthermore such a tine may be provided with a shaped digging end.

Preferably the cultivator according to the invention is provided with at least one interior rotary tine means for cultivation beside rows of plants, shield means for each row of plants and at least one exterior, rotary tine means located outside each shield means for cultivation outside the rows of plants.

Preferably each shield means comprises plate means, each plate means being positioned substantially vertically and being so shaped as to guide plants into a protected region within each shield means. The shield means may be adjustable as to angle and/or height.

The drive means for the rotary tine means is conveniently an endless chain adapted to cooperate with toothed sprocket means forming part of the rotary tine means. Alternatively the drive means may comprise one or more hydraulic motors, for example, a series of hydraulic motors coupled together. The drive motor, whether hydraulic or otherwise, may be coupled to the various tine means by a common drive shaft, for example, through individual gear boxes .

The support structure is preferably connected to a three-point linkage of a tractor for improved stability of connection and guidance of the cultivator. Preferably the support structure may be adjusted from a standard position above the earth and adjacent to the chassis of the tractor or similar vehicle to an operative position for cultivation of the earth. The support structure may be extended outwards depending on requirements, for example, to 8 metres for cotton (4m x 2).

Preferably the cultivator is provided with a sensor arm adapted to sense the level of the soil and transmit a signal to apparatus adapted to raise and the lower the cultivator so that the tine means contact the soil to the desired degree.

The cultivator according to the invention may be mounted on the front or rear of the tractor or may be mid-mounted under the tractor. The embodiment mounted below is designed to be mounted on the front three-point linkage of a tractor. A monitor camera may be used to assist the guidance of the cultivator. Alternatively a mirror or mirrors may be used for the same purpose.

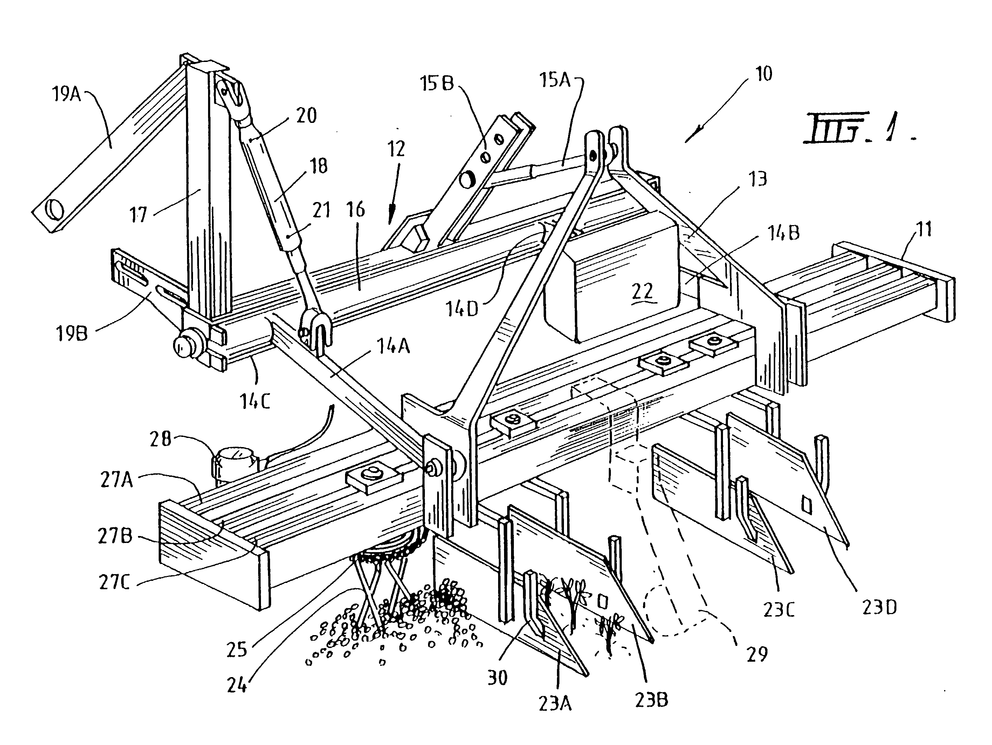

Turning now to the accompanying drawings in Figure 1 numeral 10 refers to the cultivator as a whole and numeral 11 to a mounting frame forming part of the cultivator. A carriage 12 is connected to platform 11 by way of an A-frame 13, the mounting frame being suspended from the A-frame. This A-frame 13 is connected pivotally, near the bottom of each arm of the A-frame, to lower links 14A and 14B respectively. The top of the A-frame 13 is pivotally attached by means of top link 15A to beam 15B which projects upwardly at an angle from a girder 16 forming part of carriage 12.

An anchor post 17 projects upwards from girder 16 at some distance from beam 15B. The purpose of anchor post 17 is to support a hydraulic ram 18. This hydraulic ram 18 is attached to lower link 14A which is pivotally attached to girder 16 by pivot point 14C. (An equivalent pivot point 14D provides a pivotal connection between lower link 14B and girder 16.) An upper connector 19A and a lower connector 19B are connected to anchor post 17 near its top and girder 16 near one end respectively. Hydraulic ram 18 is supplied with a breather port 20 and a supply and return port 21 for hydraulic fluid.

Numeral 22 refers to a housing for electronic equipment.

Two sets of soil shields 23A, 23B and 23C, 23D are shown depending from platform 11. A tine means 24 is shown immediately below a sprocket chain 25. (The purpose of the sprocket chain will be explained below.) The tine means 24 is supported by mounting frame 11 by means of tine means support plates, one of which is designated by numeral 26. Mounting frame 11 comprises an array of three longitudinal beams 27A, 27B and 27C.

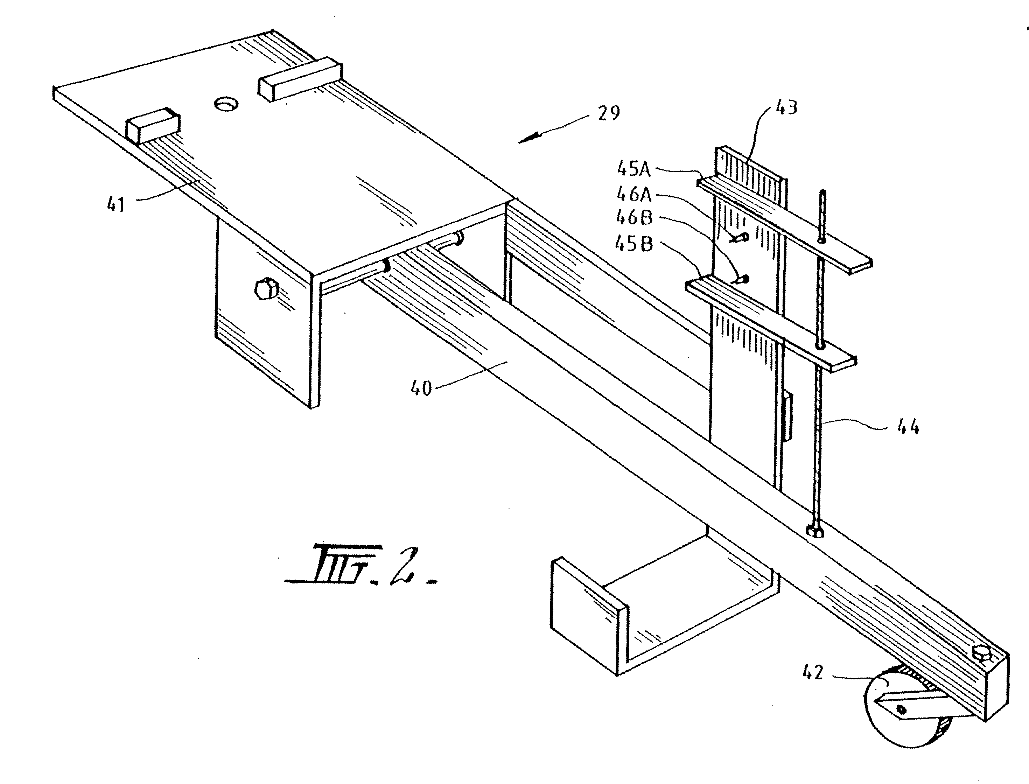

A hydraulic motor 28 is shown connected to the rear of platform 11. (Again, its purpose will appear below.) A sensor arm 29 is shown in ghost lines. (It is described below with reference to Figure 2.) Numeral 30 refers to one of a number of fertiliser supply tubes on soil shields 23A, 23B, 23C and 23D.

Referring to Figure 2. sensor arm 29 comprises an elongated spar 40 to which is attached a pivoting bracket 41 at one end. At the other end of spar 40 is attached a ground contact wheel 42. Part way along spar 40. relatively close to the ground contact wheel 42 is attached an L-shaped mast 43. Immediately adjacent mast 43 is located threaded rod 44 also attached to spar 40. Threadably connected to threaded rod 44 are two switching plates 45A and 45B. Two proximity switches 46A and 46B are located on mast 43. As ground contact wheel 42 rides over the soil and sensor arm 29 moves up and down, proximity switches 46A and 46B are in a fixed position but may be adjusted in position. Switching plates 45A and 45B determine switching of equipment (not shown) to relay signals concerning soil level and relative position to control apparatus (not shown).

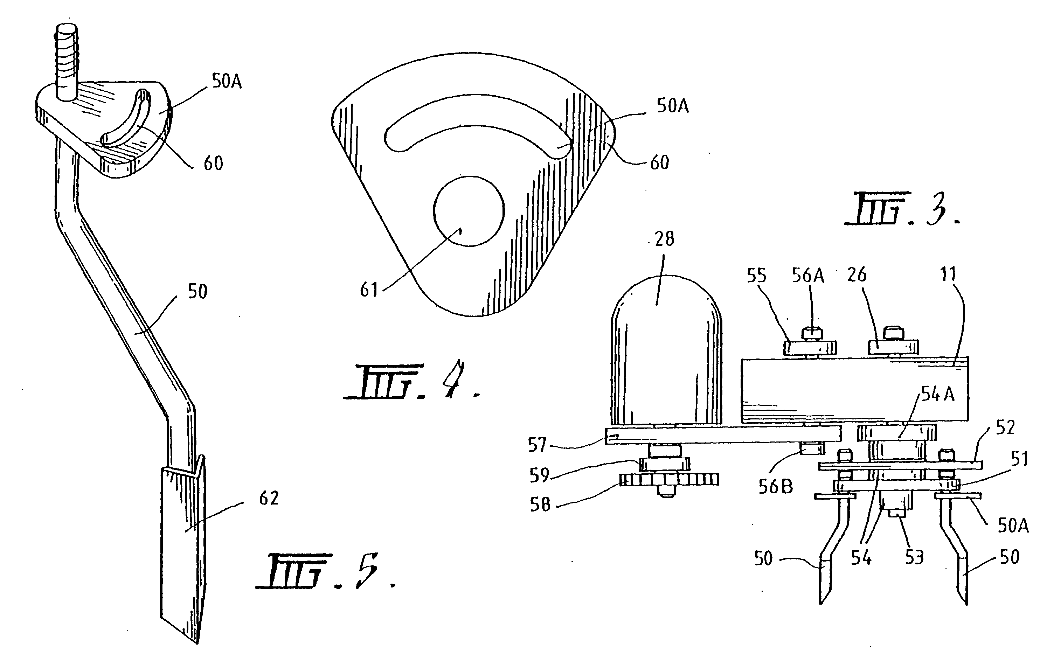

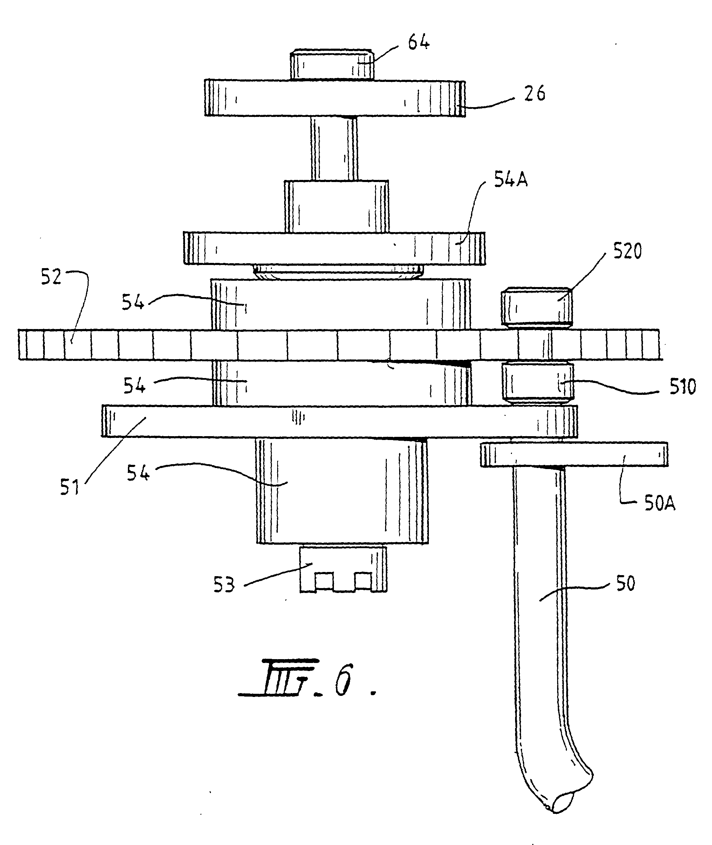

Turning to Figure 3, a tine 50 is shown penetrating a circular tine plate 51 to which is attached a rotating cam 50A; for the purpose of the rotating cam see later and see Figure 4. Tine 50 then penetrates drive sprocket 52. A retaining nut 53 is shown immediately below hub 54, which is secured to platform 11 by support plate 26.

Hydraulic motor 28 is in turn secured to mounting frame 11 by support plate 55 and nut and bolt combination 56A. 56B. The hydraulic motor sits on motor support 57 and drives motor sprocket 58 through hub 59.

Referring to Figure 4, a rotating cam 50A has a generally fan-like shape with an arcuate slot 60 located adjacent that curved side distal from the apex of the fan-like shape. A round aperture 61 is located near the apex of the fan-like shape. The purpose of the rotating cam 50A is to provide a means for altering the radial distance of the bottom end of a tine such as tine 50 from an axial line through hub 5A. Tine 50 passes through round aperture 61 and is welded thereto. A bolt and nut (not shown) may be made to travel around arcuate slot 60 causing tine 51 to rotate and hence alter the radial distance of its bottom end from the abovementioned axial line, and secure it in the desired position.

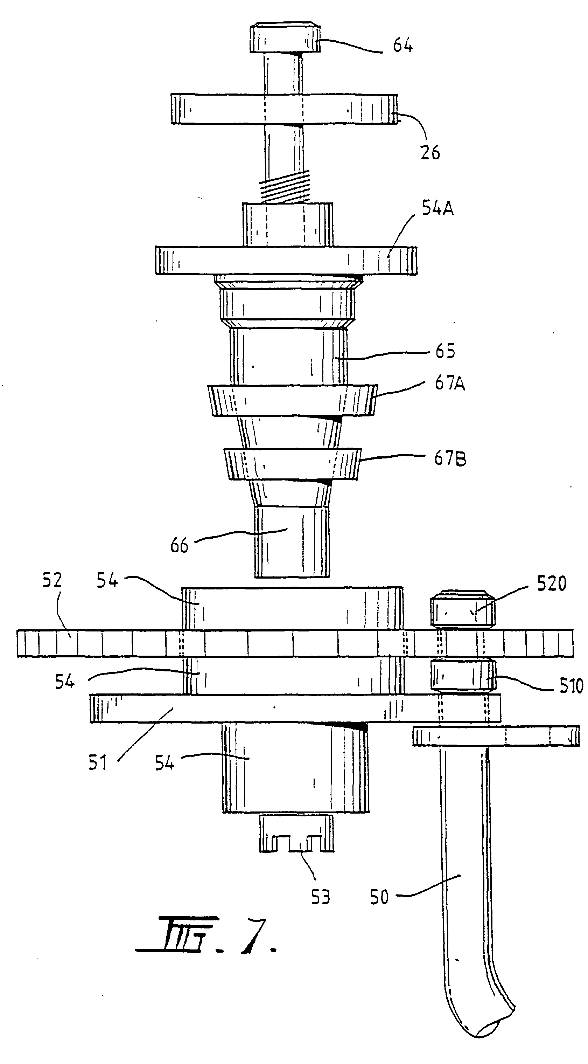

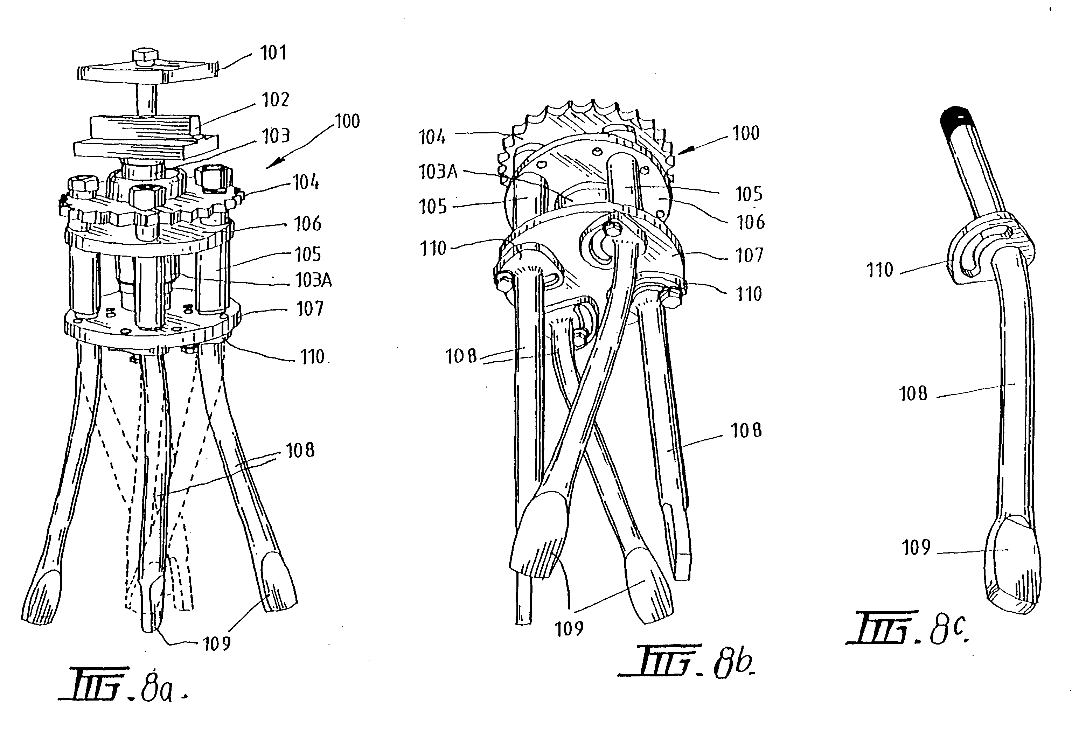

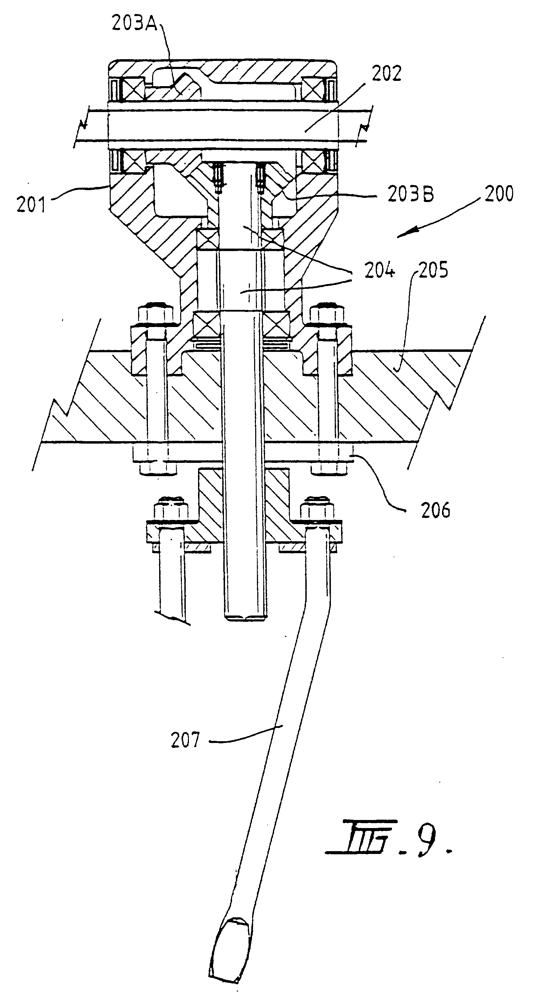

Turning to Figures 6 and 7, the tine and hub assembly is shown in more detail. Thus tine 50 penetrates tine plate 51 through rotating cam 50A. Tine 50 then penetrates spacer 510 located between tine plate 51 and sprocket 52, being secured to sprocket 52 by nut 520. Retaining nut 53 is threaded onto a journal end (see later) and supports a hub 54. This hub penetrates the central portion of tine plate 51 and also the central portion of sprocket 52. Hub 54 abuts shaft support means 54A which in turn is penetrated from above by bolt 64. This bolt also penetrates support plate 26. A journal 65 is threaded onto the lower region of shaft support means 54A, tapering to threaded end 66 to which is attached nut 53. Tapered roller bearings 67A and 67B surround the tapering region of journal 65 and serve to facilitate rotational movement of hub 54.

Figures 8(a), 8(b) and 8(c) show the use of a set of circumferentially-spaced, longitudinal spacers in line with individual tines. A tine means 100 comprises a retaining plate 101 to retain the tine means upon an element of a frame (not shown). This retaining plate cooperates with a locating slide plate 102. The tine means itself rotates around a hub 103/103A, the hub being driven by a drive sprocket 104. A number of hollow, round spacers extend between upper plate 106 and lower plate 107 arranged around hub 103/103A. A number of tines 108 corresponding to the number of spacers 105 extend through plate 107 spacers 105 and plate 106, being bolted to the upper plate. Each spacer terminates in a spade end 109 at its operative end. Numeral 110 refers to a rotating cam.

The inward curve of the tines and their flattened ends allow the tines to rotate inwards in an overlapping manner without collision.

Figure 9 shows the use of a hydraulic motor to rotate the tines. Numeral 200 refers to a tine means comprising a tine mount 201. A square section solid shaft 202 penetrates this mount and drives gear elements 203A and 203B. These gear elements in turn drive hub 204. Tine mount 201 sits on top of element 205 of a frame (not shown) and is held to that element by a sliding mount 206. One tine is shown indicated by numeral 207.

## Claims

1. A cultivator (10) adapted for attachment to a tractor or similar vehicle for use in cultivating rows of plants, including at least one pair of substantially vertically oriented rotary tine means (24,50,100,200) carried by a support structure means (11) and spaced transversely of the direction of travel of the cultivator and arranged in use to be on either side of a row of plants, drive means (25,28) attached to the support structure means for rotating the rotary tine means to cultivate the soil on either side of the row of plants within a working perimeter, and at least one pair of shield means (23A-D) carried by said support structure means and adapted in use for positioning on either side of said row of plants, **characterised in that** it further includes means for raising and lowering said support structure means with respect to the ground and **in that** each rotary tine means includes a hub (54,103,103A,204) and connector means (26) for attachment of the hub to said cultivator, each hub carrying a plurality of tines (50,108,207) each having an axial attaching portion for attaching the tine to the hub and an angularly directed portion terminating in a working end (62,109), each tine being adjustable about the axis of the attaching portion for altering the radial distance of the working end from an axial line through the hub, so that each tine means has an adjustable working perimeter which alters the area of soil cultivated, and means (50A,60,110) for securing each tine to the hub in its adjusted position, the dimensions and relative adjustment of the tine means and the shield means in use allowing soil to pass between the shield means so that soil is heaped and ridged around the plants in the rows.

2. The cultivator of claim 1, wherein the raising and lowering means moves the cultivator with respect to the tractor.

3. The cultivator of claim 1, including sensor means for sensing the level of the ground and for causing the raising and lowering means to adjust the height of the cultivator relative to the ground.

4. The cultivator of claim 3, wherein the sensor means includes a ground contact wheel (42) pivotally connected to the cultivator.

5. The cultivator of claim 4, wherein the sensor means includes means for transmitting a control signal to the raising and lowering means.

6. The cultivator as claimed in any preceding claim, wherein each shield means comprises a plate means, each plate means being positioned substantially vertically and being shaped so as to guide plants into a protected region between adjacent shield means.

7. The cultivator as claimed in any preceding claim, wherein the drive means comprises at least one hydraulic motor (28).

8. The cultivator of claim 7, wherein the drive means includes a drive motor for driving the tine means by a common drive shaft.

9. The cultivator of claim 8 further including individual gearboxes for coupling the common driveshaft to the rotary tine means.

10. The cultivator as claimed in any of claims 1 to 8, wherein each rotary tine means includes a toothed sprocket means (52) and the drive means includes an endless chain adapted to cooperate with the toothed sprocket means to rotate the rotary tine means.

11. The cultivator as claimed in any preceding claim, wherein the tractor includes a three point linkage at the front of the tractor, said support structure means being supported by said three point linkage.

12. The cultivator as claimed in any of claims 1 to 10, wherein the tractor includes a three point linkage located at the rear of the tractor, said support structure means being connected to said three point linkage.

13. The cultivator as claimed in any of claims 1 to 10, wherein the cultivator is mid-mounted under the tractor.

## Patentansprüche

1. Kultivator (10) zum Anhängen an eine Zugmaschine oder an ein ähnliches bei der Bearbeitung von Pflanzreihen einsetzbares Fahrzeug
mit wenigstens einem Paar von im wesentlichen vertikal ausgerichteten Drehzinkenvorrichtungen (24, 50, 100, 200), die an einer Trägervorrichtung (11) befestigt und quer zur Fahrtrichtung des Kultivators voneinander beabstandet und so angeordnet sind, daß sie sich im Betrieb auf jeder Seite einer Pflanzreihe befinden,
mit mit der Trägervorrichtung verbundenen Antriebsmitteln (25, 28) zum Drehen der Drehzinkenvorrichtungen, um den Boden auf jeder Seite der Pflanzreihe innerhalb eines zu bearbeitenden Bereichs zu bearbeiten,
und mit wenigstens einem Paar von Schildvorrichtungen (23A-D), die an der Trägervorrichtung befestigt sind und im Betrieb auf jeder Seite der Pflanzreihen positioniert werden,
**dadurch gekennzeichnet,**
**daß** der Kultivator weiterhin Mittel zum Anheben und Absenken der Trägervorrichtung gegenüber dem Boden aufweist, und daß jede Drehzinkenvorrichtung eine Nabe (54, 103, 103A, 204) und ein Verbindungsteil (26) zum Befestigen der Nabe am Kultivator aufweist, wobei jede Nabe eine Mehrzahl von Zinken (50, 108, 207) mit einem axialen Befestigungsteil zum Befestigen der Zinken an der Nabe und mit einem abgewinkelten Abschnitt trägt, der in einem Bearbeitungsende (62, 109) ausläuft, wobei zur Veränderung der radialen Entfernung des Bearbeitungsendes von der Nabenachse jede Zinke um die Achse des Befestigungsteils einstellbar ist, so daß jede Zinke auf einen zu bearbeitenden Bereich eingestellt werden kann, wodurch der Bereich des bearbeiteten Bodens verändert wird,
und **daß** der Kultivator Mittel (50A, 60, 110) zum Befestigen jeder Zinke in ihrer eingestellten Position an der Nabe aufweist, wobei die Abmessungen und die relative Einstellung der Zinken und der Schildvorrichtungen im Betrieb Erde durch die Schutzvorrichtungen treten lassen, so daß Erde um die Pflanzen in den Reihen herum angehäuft und gefurcht wird.

2. Kultivator nach Anspruch 1, **dadurch gekennzeichnet, daß** die Vorrichtung zum Anheben und Absenken den Kultivator gegenüber der Zugmaschine bewegt.

3. Kultivator nach Anspruch 1, **dadurch gekennzeichnet, daß** der Kultivator Sensoren aufweist, die die Höhe des Bodens abtasten und bewirken, daß die Vorrichtung zum Anheben und Absenken den Kultivator in der Höhe gegenüber dem Boden einstellt.

4. Kultivator nach Anspruch 3, **dadurch gekennzeichnet, daß** der Sensor ein Bodenkontaktrad (42) aufweist, das mit dem Kultivator schwenkbar verbunden ist.

5. Kultivator nach Anspruch 4, **dadurch gekennzeichnet, daß** der Sensor Mittel zur Übertragung eines Kontrollsignals an die Vorrichtung zum Anheben und Absenken aufweist.

6. Kultivator nach einem der vorhergehenden Ansprüche, **dadurch gekennzeichnet, daß** jede Schildvorrichtung eine Platte aufweist, wobei jede Platte im wesentlichen vertikal angeordnet und so geformt ist, daß sie Pflanzen in einen Schutzbereich zwischen benachbarten Schildvorrichtungen führt.

7. Kultivator nach einem der vorhergehenden Ansprüche, **dadurch gekennzeichnet, daß** das Antriebsmittel wenigstens einen hydraulischen Motor (28) aufweist.

8. Kultivator nach Anspruch 7, **dadurch gekennzeichnet, daß** das Antriebsmittel einen Antriebsmotor zum Antreiben der Zinken über eine gemeinsame Antriebswelle aufweist.

9. Kultivator nach Anspruch 8, **dadurch gekennzeichnet, daß** der Kultivator einzelne Getriebegehäuse zum Kuppeln der gemeinsamen Antriebswelle an die Drehzinken aufweist.

10. Kultivator nach einem der Ansprüche 1 bis 8, **dadurch gekennzeichnet, daß** jede Drehzinke eine Kettenzahnvorrichtung (52) und das Antriebsmittel eine Endloskette aufweist, die mit der Kettenzahnvorrichtung zum Drehen der Drehzinken zusammenwirkt.

11. Kultivator nach einem der vorhergehenden Ansprüche, **dadurch gekennzeichnet, daß** die Zugmaschine an ihrer Vorderseite eine Dreipunktkupplung aufweist, an die die Trägervorrichtung angekuppelt wird.

12. Kultivator nach einem der Ansprüche 1 bis 10, **dadurch gekennzeichnet, daß** die Zugmaschine an ihrer Rückseite eine Dreipunktkupplung aufweist, an die die Trägervorrichtung angekuppelt wird.

13. Kultivator nach einem der Ansprüche 1 bis 10, **dadurch gekennzeichnet, daß** der Kultivator mittig unter der Zugmaschine befestigt ist.

## Revendications

1. Cultivateur (10) conçu pour être fixé à un tracteur ou un véhicule semblable en vue d'une utilisation pour la culture de rangs de plantes, comprenant au moins une paire de moyens de dents rotatives orientés pratiquement verticalement (24, 50, 100, 200) porté par un moyen de structure de support (11) et espacés transversalement à la direction de déplacement du cultivateur et agencés en utilisation pour être de chaque côté d'un rang de plantes, un moyen d'entraînement (25, 28) fixé sur le moyen de structure de support en vue de faire tourner le moyen de dents rotatives afin de cultiver la terre de chaque côté du rang de plantes à l'intérieur d'un périmètre de travail, et au moins une paire de moyens de protection (23A à D) porté par ledit moyen de structure de support et conçus en utilisation pour se positionner de chaque côté dudit rang de plantes, **caractérisé en ce qu'**il comprend en outre un moyen destiné à élever et abaisser ledit moyen de structure de support par rapport au sol et **en ce que** chaque moyen de dents rotatives comprend un moyeu (54, 103, 103A, 204) et un moyen de raccordement (26) destiné à la fixation du moyeu audit cultivateur, chaque moyeu portant une pluralité de dents (50, 108, 207) ayant chacune une partie de fixation axiale destinée à fixer la dent au moyeu et une partie orientée suivant un angle se terminant en une extrémité de travail (62, 109), chaque dent pouvant être ajustée autour de l'axe de la partie de fixation en vue de modifier la distance radiale de l'extrémité de travail depuis une ligne axiale au travers du moyeu, de sorte que chaque moyen de dents possède un périmètre de travail pouvant être ajusté qui modifie la surface de la terre cultivée, et un moyen (50A, 60, 110) destiné à fixer chaque dent au moyeu dans sa position ajustée, les dimensions et l'ajustement relatif du moyen de dents et des moyens de protection en utilisation permettant à la terre de passer entre les moyens de protection de sorte que la terre soit amoncelée et forme une butte autour des plantes dans les rangs.

2. Cultivateur selon la revendication 1, dans lequel le moyen d'élévation et d'abaissement déplace le cultivateur par rapport au tracteur.

3. Cultivateur selon la revendication 1, comprenant un moyen de capteur destiné à détecter le niveau du sol et à amener le moyen d'élévation et d'abaissement à ajuster la hauteur du cultivateur par rapport au sol.

4. Cultivateur selon la revendication 3, dans lequel le moyen de capteur comprend une roue de contact avec le sol (42) reliée de façon pivotante au cultivateur.

5. Cultivateur selon la revendication 4, dans lequel le moyen de capteur comprend un moyen destiné à transmettre un signal de commande au moyen d'élévation et d'abaissement.

6. Cultivateur selon l'une quelconque des revendications précédentes, dans lequel chaque moyen de protection comprend un moyen de plaque, chaque moyen de plaque étant positionné pratiquement verticalement et étant conformé de façon à guider les plantes dans une région protégée entre des moyens de protection adjacents.

7. Cultivateur selon l'une quelconque des revendications précédentes, dans lequel le moyen d'entraînement comprend au moins un moteur hydraulique (28).

8. Cultivateur selon la revendication 7, dans lequel le moyen d'entraînement comprend un moteur d'entraînement destiné à entrainer le moyen de dents par un arbre d'entraînement commun.

9. Cultivateur selon la revendication 8, comprenant en outre des trains d'engrenages individuels destinés à accoupler l'arbre d'entraînement commun aux moyens de dents rotatives.

10. Cultivateur selon l'une quelconque des revendications 1 à 8, dans lequel chaque moyen de dents rotatives comprend un moyen de pignon denté (52) et le moyen d'entraînement comprend une chaîne sans fin conçue pour coopérer avec le moyen de pignon denté afin de faire tourner le moyen de dents rotatives.

11. Cultivateur selon l'une quelconque des revendications précédentes, dans lequel le tracteur comprend une liaison à trois points à l'avant du tracteur, ledit moyen de structure de support étant supporté par ladite liaison à trois points.

12. Cultivateur selon l'une quelconque des revendications 1 à 10, dans lequel le tracteur comprend une liaison à trois points située à l'arrière du tracteur, ledit moyen de structure de support étant relié à ladite liaison à trois points.

13. Cultivateur selon l'une quelconque des revendications 1 à 10, dans lequel le cultivateur est à moitié monté sous le tracteur.
